# EUROPEAN PATENT APPLICATION

(11) **EP 1 672 479 A2**
(43) Date of publication of application: **21.06.2006**
(21) Application number: 05111167.2
(22) Date of filing: 23.11.2005
(51) Int. Cl.: G06F 3/14, G09G 3/20

(54) **Image display apparatus and method of operating such**

(30) Priority: 20.12.2004 KR 2004108880
(71) Applicant: Samsung Electronics Co., Ltd., Suwon-si, Gyeonggi-Do (KR)
(72) Inventor: Joo, Jae-il, Yeongtong-gu Suwon-si Gyeonggi-do (KR); Kweon, Tae-deok, Yangjae-dong Seocho-gu Seoul (KR); Hong, Jin-hyuck, Bupyeong-gu Incheon (KR)
(74) Representative: Derry, Paul Stefan

(57) **Abstract**

An image display apparatus having a standard compatibility function and method thereof and being part of e.g. a home network system. The image display apparatus includes a communication interface for communicating data with an audio and video (AV) device, a converter for converting YCbCr data received from the AV device to αRGB data, an image creator for creating an on-screen display (OSD) image using the αRGB data, and a controller for controlling to output the OSD image as a web browser on a screen. Accordingly, the image display apparatus can display the data received from a device conforming to a different standard on the screen.

## Description

### Description

The invention relates generally to an image display apparatus and a method of operating such. More particularly, although not exclusively, the invention relates to an image display apparatus having a standard compatibility function, which conforms to a Consumer Electronics Association (CEA) 2027 standard relating to an expandable Home Theatre (XHT) technology, to communicate with an audio and video (AV) device conforming to the Electronic Industries Association (EIA) 775 and to display bitmap data received from the AV device on a screen as a web browser, and to a corresponding method.

Generally, a home network system provides a path for data communications among devices in a home, such as computer-related devices, audio and video (AV) devices, a control device or a security device for home automation, and game devices. The home network system enables intelligent communications by providing a link to a foreign communication network. Ultimately, the home network system maximises information resource sharing and utility of the respective devices over the network in the home.

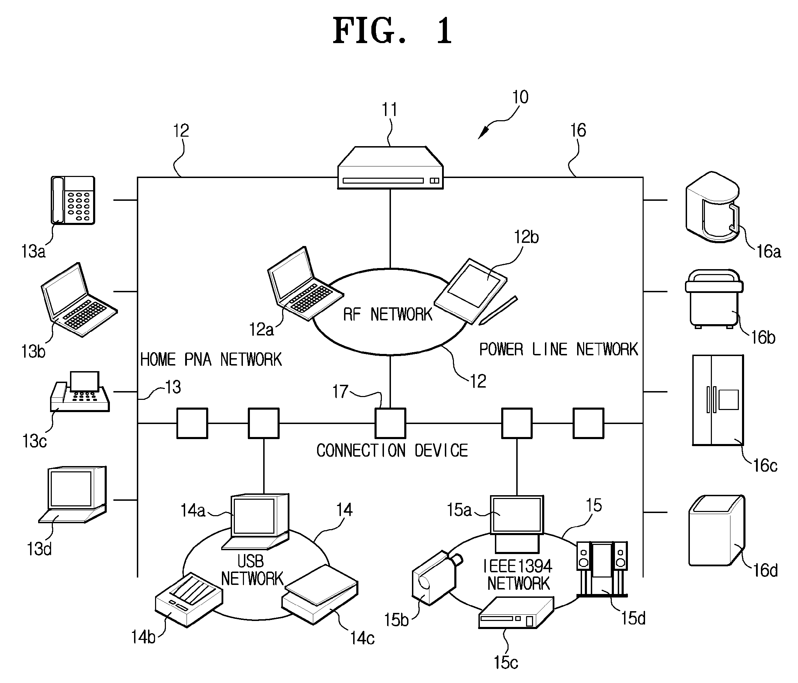

Figure 1 is a construction of a home network system including a conventional image display apparatus.

In Figure 1, a notebook computer 12a is connected to a personal digital assistant (PDA) 12b over a radio frequency (RF) network 12 in a 2.4 GHz band. The RF network 12 is a wireless network for connecting devices. In addition to the RF network 12, the wireless network includes IEEE 802.11b using a direct sequence spread spectrum (DSSS) transmission method in 2.4 GHz band, IEEE 802.11a a using 5 GHz band, Bluetooth supporting a transmission rate of 1 Mbps, HiperLAN/2 of 5 GHz band, ultra wideband using a very wide frequency band more than several GHz in a baseband without using an RF carrier, Zigbee being a low-power and short-range wireless communication specification, and infrared communication of the Infrared Data Association (IrDA).

Wired networks to connect devices include a Home Phoneline Network Alliance (PNA) network 13 connecting a telephone 13a, a notebook computer 13b, a facsimile machine 13c, and a computer 13d using a phoneline, a universal serial bus (USB) network 14 connecting a computer 14a, a printer 14b, and a scanner 14c using a USB cable, the IEEE 1394 network 15 connecting AV devices such as a digital television (DTV) 15a, a camcorder 15b, a digital versatile disk (DVD) player 15c, and an audio device 15d using an IEEE 1394 cable, and a power line network 16 connecting a coffee maker 16a, an electric rice pot 16b, a refrigerator 16c, and a washer 16d using a power line.

The wired and wireless networks 12, 13, 14, 15, and 16 are interconnected via a connection device 17 such as a bridge to configure a home network system 10. A gateway 11 serves as a path connecting the devices in the wired and wireless networks 12, 13, 14, 15 and 16 to a foreign network such as an Internet and a public switched data network (PSDN).

As set forth, the home network system 10 includes devices conforming to various standards, and an individual device requires a standard compatibility function for the sake of mutual communications. For example, if a standard of an image display apparatus like the DTV 15a is different from that of the AV devices 15b, 15c, and 15d, the DTV 15a cannot communicate with the AV devices 15b, 15c, and 15d over the IEEE 1394 network 15.

Especially, if the DTV 15a and the DVD player 15c conform to the Electronic Industries Alliance (EIA) 775 being a DTV digital interface standard, the DTV 15a is able to signal-process and display on a screen bitmap data received through the IEEE 1394 cable. If the DTV 15a conforms to the Consumer Electronics Association (CEA) 2027 standard relating to an eXpandable Home Theatre (XHT) technology, the DTV 15a cannot successfully communicate with the DVD player 15c. This is because a physical information transport layer is the same, e.g. IEEE 1394, but data formats are different from each other. As a result, the DTV 15a cannot process the data received from the DVD player 15c.

Aspects of the present invention provide an image display apparatus having a standard compatibility function enabling the image display apparatus to receive data from an audio and video (AV) device conforming to a standard different from a standard of the image display apparatus, convert the received data to data processable internally, and display the converted data on a screen, and a method thereof.

An image display apparatus according to the invention includes a communication interface for communicating data with an audio and video (AV) device; a converter for converting YCbCr data received from the AV device to αRGB data; an image creator for creating an on-screen display (OSD) image using the αRGB data; and a controller for controlling to output the OSD image as a web browser on a screen.

The image display apparatus may further include a buffer for temporarily storing the αRGB data.

The image display apparatus may further include a display for outputting the web browser on the screen.

The communication interface connects to the AV device through an Institute of Electrical and Electronics Engineers (IEEE) 1394 cable.

The controller includes a common gateway interface (CGI) section for writing a hypertext markup language (HTML) page using the OSD image; a web browser section for generating the web browser by interpreting the HTML page; and a web server section for providing the HTML page written at the CGI section to the web browser section.

The image display apparatus may further include a command receiver for receiving an external manipulation signal. The controller may generate control data corresponding to the external manipulation signal and control the communication interface to transmit the control data to the AV device.

Consistent with the above aspects of the present invention, a standard compatibility method of an image display apparatus includes receiving YCbCr data from an audio and video (AV) device; converting the YCbCr data to αRGB data; creating an on-screen display (OSD) image using the αRGB data; and outputting the OSD image as a web browser on a screen.

The YCbCr data from the AV device may be received through communication according to an Institute of Electrical and Electronics Engineers (IEEE) 1394.

The outputting of the OSD image as the web browser on the screen may write a hypertext markup language (HTML) page using the OSD image, and generate the web browser by interpreting the HTML page.

The standard compatibility method may further include updating and storing the αRGB data.

The OSD image may be generated using the updated αRGB data and re-output as the web browser on the screen.

The standard compatibility method may further include receiving an external manipulation signal and generating control data corresponding to the external manipulation signal and transmitting the control data to the AV device.

Embodiments of the invention will now be described by way of example only with reference to the accompanying drawing figures of which:
Figure 1 is a diagram of a construction of a home network system including a conventional image display apparatus;
Figure 2 is a block diagram of an embodiment of image display apparatus according to and operating according to the present invention; and
Figure 3 is a flowchart of an operation of the Figure 2 image display apparatus.

In the drawings, like reference numerals refer to the like elements throughout.

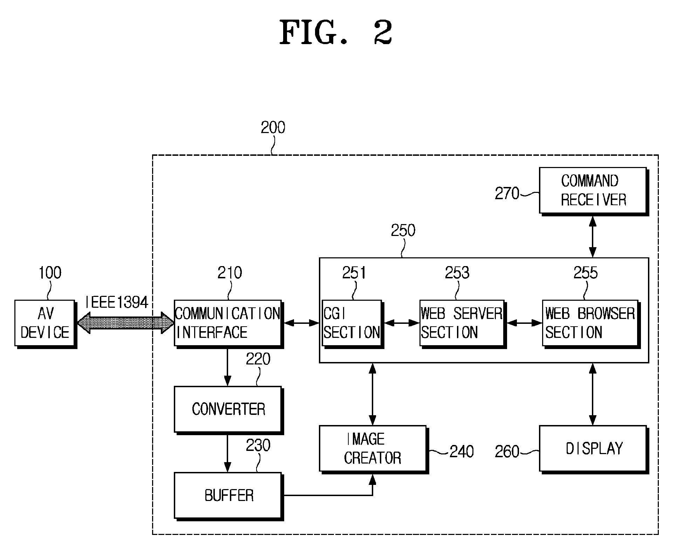

Referring to Figure 2, image display apparatus 200 includes a communication interface 210, a converter 220, a buffer 230, an image creator 240, a controller 250, a display 260, and a command receiver 270.

The communication interface 210 serves as a communication interface with an audio and video (AV) device 100 that is connected through an Institute of Electrical and Electronics Engineers (IEEE) 1394 cable. The IEEE 1394 cable compliant with the IEEE 1394 standard is primarily used to connect a computer to computer peripherals, or to connect the image display apparatus 200 such as a digital television to the AV device 100 such as a cable set-top box, a digital video home system (DVHS), or an audio and video hard disk drive (AVHDD).

The IEEE 1394 standard enables isochronous and asynchronous transmissions. Control data and on-screen display (OSD) data are transmitted isochronously through the IEEE 1394 cable, and real-time video and audio data are transmitted asynchronously through the IEEE 1394 cable.

It is possible to transmit data compliant to the Electronic Industries Association (EIA) 775 and data compliant to the Consumer Electronics Association (CEA) 2027. The EIA 775 is a digital interface standard for the DTV specified by the EIA. The CEA 2027, for which the eXpandable Home Theatre (XHT) technology has been developed, is specified as a home network solution standard by the CEA.

The XHT technology uses the IEEE 1394 cable, that can most stably transfer a plurality of high definition (HD) signals and an IP over 1394 protocol that adopts Internet protocol (IP), and thus controls a plurality of image display apparatuses 200 as well as one or more AV devices 100 connected to the image display apparatus 200.

Even when only a DTV in one room, for instance a living room, has a digital broadcast receiver and a DTV in another room does not have a digital broadcast receiver, the XHT technology enables a user to view the digital broadcasts in the other room by utilising the digital broadcast reception function of the DTV in the living room. It is true to the DVT in the living room, which alone is connected to a DVD player, a home theatre, and a camcorder. By connecting the DTV to the Internet, a simple manipulation of a remote controller leads to diverse contents including films, music, games, and education. The remote controller manipulation relates to the CEA 931, which is a standard to carry a remote controller manipulation signal, which will be described, received from the command receiver 270 through the IEEE 1394 cable.

The converter 220 converts YCbCr data received from the AV device 100, to αRGB data. When the AV 100 outputs the YCbCr data according to the MPEG standard, the YCbCr data is transmitted to the communication interface 210 through the IEEE 1394 cable. The converter 220 converts the YCbCr data, which is received via the communication interface 210, to the αRGB data. The αRGB data is R (red) data, G (green) data, and B (blue) data representing colors of an image. The αdata indicates opacity. The RGB data are 8 bits, respectively. The αdata is 8 bits.

The buffer 230 temporarily stores the αRGB data converted at the converter 220. When YCbCr data already converted in the AV device 100 is delivered, only αRGB data corresponding to the converted YCbCr data is updated in part and stored at the buffer 230. A maximum capacity of the buffer 230 can store a 640 x 480 image.

The image creator 240 creates an OSD image to be displayed as a web browser using the αRGB data stored at the buffer 230.

The controller 250 generates a control signal corresponding to a user's command received through the command receiver 270 which will be explained, and transmits the generated control signal to the AV device 100. The controller 250 outputs the OSD image created at the image creator 240 as the web browser. The controller 250 includes a common gateway interface (CGI) section 251, a web server section 253, and a web browser section 255.

The CGI section 251 allows communications with a database server or another server by supplementing a function of a web server executed in the web server section 253. The CGI is an interface for expanding the function of the web server, and refers to a communication protocol between the web server and other programs. The CGI section 251 writes a hypertext markup language (HTML) page using user-defined tags, and adds the OSD image created at the image creator 240 to the HTML page. Also, the CGI section 251 appends a multi-purpose Internet Mail Extensions (MIME)-Type relating to a type of a stream transferred to the web browser section 255, to be explained, to a header, and transfers the stream to the web server section 253. The MIME is a protocol to exchange data such as images, video, and sound as well as texts.

The web server section 253 executes the web server and transfers the HTML page generated at the CGI section 251 to the web browser section 255 according to the Transmission Control Protocol/Internet Protocol (TCP/IP). The web server may be the Apache available to most of 32 Bit Window and Unix-based operating systems, the Internet Information Server (IIS) with additional capabilities for Windows NT, and the Netscape Enterprise Server.

The web browser section 255 receives the HTML page and generates a web browser by interpreting the user-defined tags and the MIME-Type.

The display 260 outputs the web browser generated at the web browser section 255 on a screen so that the user can view the data received from the AV device 100. The command receiver 270 provides a user's command, which is received through a remote controller (not shown) or a manipulation section (not shown), to the controller 250 to be described.

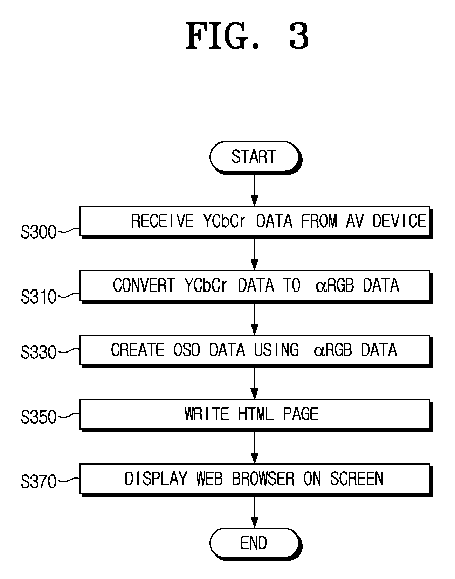

In Figure 3, the image display apparatus 200 receives the YCbCr data from the AV device 100 that is connected through the IEEE 1394 cable, via the communication interface 210 (S300).

After the converter 220 converts the YCbCr data to the αRGB data, the buffer 230 temporarily stores the αRGB data. In more detail, the converter 220 updates and converts the received YCbCr data, which consecutively changes in the AV device 100, to the αRGB data, and the buffer 230 stores the updated αRGB data (S310).

The image creator 240 creates the OSD image using the αRGB data (S330).

The CGI section 251 writes the HTML page using the user-defined tags. The CGI section 251 adds the OSD image created at the image creator 240 to the HTML page, appends the MIME-Type to the header, and transfers the HTML page to the web server section 253 (S350).

The web server section 253 transfers the HTML page to the web browser section 255 according to the TCP/IP. The web browser section 255 upon receiving the HTML page generates the web browser by interpreting the user-defined tags and the MIME-Type. The generated web browser is output on the screen through the display 260 (S370).

Therefore, the image display apparatus 200 can display on its screen the data received from the AV device 100 conforming to a different standard.

In light of the foregoing, the image display apparatus displays on the screen the data which is received from the AV device compliant with a different standard so that the user can check the received data. In result, various home appliances conforming to different standards from each other can communicate mutually.

It will be appreciated that changes may be made without departing from the principles of the invention, the scope of which is defined in the claims.

## Claims

1. An image display apparatus comprising:
a communication interface for communicating with an audio-visual AV device;
a converter for converting YCbCr data received from the AV device to αRGB data;
an image creator for creating an on-screen display (OSD) image using the αRGB data; and
a controller for providing the OSD image through a web browser on a screen.

2. The image display apparatus of claim 1, further comprising:
a buffer for temporarily storing the αRGB data.

3. The image display apparatus of claim 1 or claim 2, further comprising:
a display.

4. The image display apparatus of any preceding claim, wherein the communication interface connects to the AV device through an Institute of Electrical and Electronics Engineers (IEEE) 1394 cable.

5. The image display apparatus of any preceding claim, wherein the controller comprises:
a common gateway interface (CGI) section for writing a hypertext markup language (HTML) page using the OSD image;
a web browser section for generating the web browser by interpreting the HTML page; and
a web server section for providing the HTML page written at the CGI section to the web browser section.

6. The image display apparatus of any preceding claim, further comprising:
a command receiver for receiving an external manipulation signal,
wherein the controller is operable to generate control data corresponding to the external manipulation signal and to control the communication interface to transmit the control data to the AV device.

7. A method of operating an image display apparatus, the method comprising:
receiving YCbCr data from an audio-visual AV device;
converting the YCbCr data to αRGB data;
creating an on-screen display (OSD) image using the αRGB data; and
outputting the OSD image with a web browser on a screen.

8. The method of claim 7, wherein the YCbCr data from the AV device is received through communication according to an Institute of Electrical and Electronics Engineers (IEEE) 1394 standard.

9. The method of claim 7 or claim 8, wherein the outputting of the OSD image as the web browser on the screen includes writing a hypertext markup language (HTML) page using the OSD image and generating the web browser by interpreting the HTML page.

10. The method of any of claims 7 to 9, further comprising:
updating and storing the αRGB data.

11. The method of claim 10, further comprising:
generating the OSD image using the updated αRGB data; and
re-outputting the OSD image as the web browser on the screen.

12. The method of any of claims 7 to 11, further comprising:
receiving an external manipulation signal; and
generating control data corresponding to the external manipulation signal and transmitting the control data to the AV device.
